# EUROPEAN PATENT APPLICATION

(11) **EP 2 587 462 A1**
(43) Date of publication of application: **01.05.2013**
(21) Application number: 11187235.4
(22) Date of filing: 31.10.2011
(51) Int. Cl.: G08B 13/196, H04N 5/232, G06T 7/00, G08B 29/18

(54) **Image monitoring system and method with false alarm rate reduction**

(71) Applicant: Axis AB, 223 69 Lund (SE)
(72) Inventor: Hjelmström, Jonas, 245 92 Staffanstorp (SE)
(74) Representative: Bratt, Hanna Catharina

(57) **Abstract**

The amount of falsely triggered events are reduced in a monitoring system comprising an imaging device, and arranged for monitoring a scene, by detecting motion in an area of the monitored scene by analyzing differences in a series of at least two images of the scene captured by the imaging device, focusing the imaging device on the area where motion is detected, calculating a distance to the area by determining at least one setting used by the imaging device for focusing the area, and if the distance is within a predetermined distance interval of interest, triggering an event. Motion occurring outside the monitored region is thereby neglected, e.g. rain drops trickling on the image device, reducing the false alarm rate.

## Description

### Technical field

The present invention relates to a method of monitoring a scene using a monitoring system comprising an imaging device and arranged for monitoring the scene.

### Background art

Surveillance cameras are currently used in many different applications, for monitoring environments both indoors and outdoors. In some cases, the camera is combined with a motion detection sensor for sensing movement within the area that the surveillance camera is covering. When such a motion detection sensor detects a movement, an operator may be alerted and use the image captured by the imaging device to determine whether any actions should be taken based on the object causing the alert. A problem when using these types of surveillance systems is that false alarms are often triggered by movement not being caused by any object of interest.

EP 1 875 449 discloses an alarm installation system for detecting events comprising a primary detection system using pulsed laser light for detecting variations in a distance profile of a terrain and a local verification system which verifies the observation of the primary detection system by analyzing the changes in the distance profile in order to distinguish between distance profiles changes which possibly indicate an event and distance profile changes which are likely not associated with an event. The amount of change, the size of the moving object or the nature of the movement is used as criterions; as an example a rhythmic back and forth going movement indicates movement of a tree in wind and should not be considered an event.

### Summary of the invention

An object of the present invention is to provide an improved method for reducing the amount of falsely triggered events in monitoring systems, which efficiently reduces the number of event triggers caused by movements not related to objects of interest.

This and further objects are achieved by a method having the features as defined in claim 1, and by a monitoring system having the features as defined in claim 7. Further embodiments are defined in the dependent claims.

In particular, according to a first aspect of the invention, a method of reducing the amount of falsely triggered events in a monitoring system comprising an imaging device and arranged for monitoring the scene, comprises the steps of:
detecting motion in an area of the monitored scene by analyzing differences in a series of at least two images of the scene captured by the imaging device,
focusing the imaging device on the area where motion is detected,
calculating a distance to the area by determining at least one setting used by the imaging device for focusing the area, and
if the distance is within a predetermined distance interval of interest, triggering an event.

According to another aspect of the invention, a monitoring system arranged for monitoring a scene comprises
a motion detection unit arranged to detect a motion in an area in the monitored scene by analyzing differences in a series of at least two images captured by an imaging device,
the imaging device arranged to focus the area where motion is detected,
a distance calculating unit arranged to calculate the distance to the area by determining at least one setting used by the imaging device for focusing the area,
an event triggering unit arranged to trigger an event if the distance is within a predetermined interval of interest.

The inventive method and system does not need any separate or external motion detection equipment for detecting movement, as the images captured by the imaging device are analyzed for detecting motion. This in turn has the advantage of simplifying installation of the monitoring system and making it less prone to failure as there are fewer separate parts to the system. Further, the calculation of the distance by determining a setting of the imaging device used for focusing the area is an efficient and simple way of determining the distance to the area where movement is detected without the use of any separate or external distance measuring equipment.

The event triggered may be a motion detection event. In that case it is possible to reduce the amount of falsely triggered events in a monitoring system by on the one hand ignoring detected movement caused e.g. by rain drops on the lens of the imaging device, which then for this purpose may be ignored as they are too close, and on the other hand ignoring movement detected outside the area of interest, e.g. caused by bicycles moving or people walking on a path on the far side of a monitored parking lot.

The event triggered may additionally or alternatively be a rain detection event. When a motion is detected in an interval very close to the imaging device, corresponding to rain drops trickling down the imaging device and possibly obscuring its view, a rain detection event may be triggered, e.g. that a rain wiping equipment is activated for clearing the view of the imaging device.

The at least one setting may comprise a position setting of a focus lens in the imaging device, and may further comprise a position setting of a zoom lens in the imaging device and/or a position setting of an image sensor in the imaging device.

The position setting of the focus lens and/or zoom lens and/or image sensor may be determined by a position sensing system sensing the position of the focus lens and/or zoom lens and/or image sensor, or the position of a motor driving the focus lens and/or zoom lens and/or image sensor, both being easily implemented ways of precisely determining the position setting and hence the distance. The latter option may be particularly useful in case a piezoelectric motor is used for driving the focus lens, zoom lens and/or image sensor. The position sensing system may comprise at least one of a light based position sensor or a magnetic sensor such as a Hall effect sensor.

As an alternative, in case a step motor is used, the position setting of the focus lens and/or zoom lens and/or image sensor may be determined from a position of a step motor driving the focus lens and/or zoom lens and/or image sensor.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description. Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a sensor" or "the sensor" may include several devices, and the like. Furthermore, the word "comprising" does not exclude other elements or steps.

### Brief description of the drawings

The invention will now be described in more detail by way of example and with reference to the accompanying schematic drawings, in which:
Fig. 1 shows a monitoring system.
Fig. 2 illustrates a method according to the invention.

### Detailed description of the invention

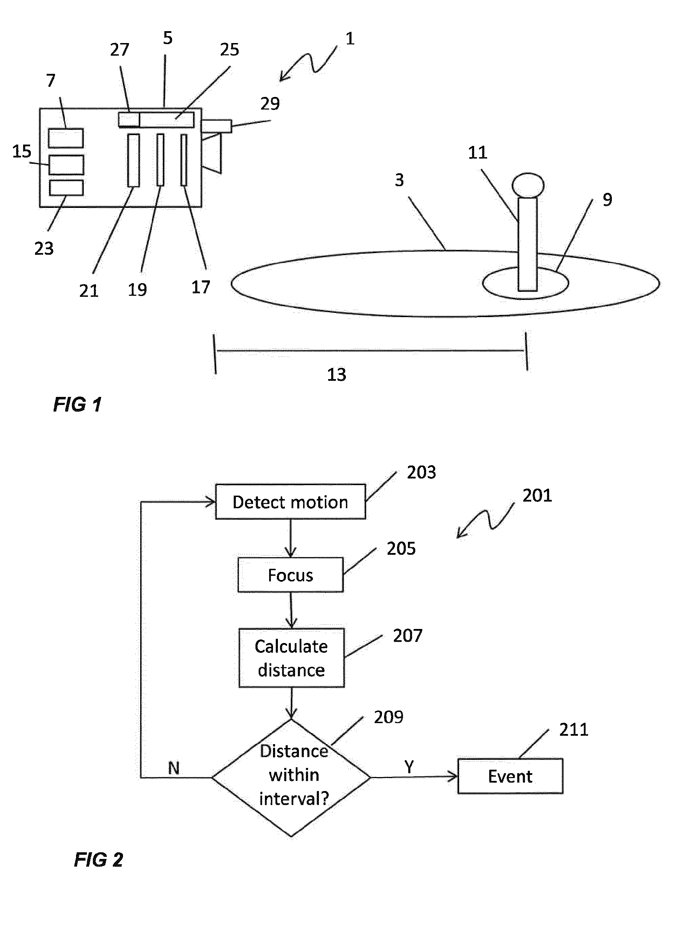

Fig 1 shows a monitoring system 1 which is arranged to monitor a scene 3 and which comprises an imaging device 5 capturing images of the scene 3. The monitoring system further comprises a motion detection unit 7 which detects motion occurring in the monitored scene 3. The motion detection unit 7 detects motion by analyzing differences in a series of at least two images of the scene 3 which are captured by the imaging device 5. When motion is detected by the motion detection unit 7, the imaging device 5 focuses the area 9 where the motion is detected, typically utilizing motorized focus. For illustrative purposes, the motion is assumed to be caused by an object 11.

The distance 13 to the area 9 where the motion has been detected is calculated by a distance calculation unit 15, which uses information on the setting(s) used by the imaging device 5 for focusing the area for determining the distance. Such a setting may for instance include a position setting of a focus lens 17, a zoom lens 19 or an image sensor 21 which the imaging device 5 uses for focusing the area 9.

In this context it should be noted that both the motion detection and the distance calculation to the area where the motion is detected are performed without the need for any external equipment such as separate distance measuring devices or separate motion detection sensors. This in turn provides a simpler installation of the surveillance equipment with fewer separate parts and reduced risk of failures.

If the distance 13 is determined to lie within an interval of interest, an event triggering unit 23 triggers a motion detection event, and if not so, no event is triggered. The event could e.g. be that an alarm is sent to an external system which may decide what actions to be taken or an alarm sent to an operator of the monitoring system who e.g. may perform a visual inspection of the object causing the motion. In addition to the event being an alarm, the event triggered could e.g. be a closing or locking of doors, to start a recording device for recording images of the scene, to initiate the movement of a camera or to create a log entry in a log file.

The interval of interest is set based inter alia on the insight by the inventor that a lot of false events are triggered from rain drops trickling down the imaging device in its view direction. As the rain drops are moving, they are detected by the motion detection unit 7, but since they do not represent any event of interest, they can according to the inventive method and system be disregarded for motion detection purposes and the amount of falsely triggered events are reduced, meaning e.g. that the operator can be spared many false alarms.

As another option, an interval of interest could be set so that when movement is detected very close to the imaging device corresponding to rain drops trickling down the outside of the imaging device in its view direction, a rain detection event is triggered such that a rain wiping equipment 29 is activated for removing the rain drops so that they do not obscure the view of the imaging device.

Another insight by the inventor is that in many cases false events are triggered by motion taking place on the far side of the scene being monitored, or in other words outside the scene. This may e.g. be the case when a parking lot is monitored and a bicycle path is laid out on the far side of the parking lot where bicycles are passing from time to time. The motion represented by these bicycles will then in most cases be detected by the motion detection unit 7 as it analyzes differences in a series of images, but as it does not represent any motion of interest it can be disregarded using the method and system of the invention, and again many false events are avoided.

It may be noted that the interval of interest may be set as a closed interval, i.e. "x<distance<y" or as an open ended interval, i.e. "distance<x" or "distance>y", where x and y represents suitable values of distances. It would also be possible to define an interval of interest comprising several subintervals, each interval being connected to a specific event, such that when motion is detected in one interval of interest, one event is triggered, and when motion is detected in another interval, another event is triggered. Relating to the above examples, a first interval could be set for movement occurring very close to the imaging device, representing rain drops on the device, which then triggers a rain detection event. A second interval may be set that corresponds to the area being monitored by the monitoring device, and when movement is detected in that interval, a motion detection event is triggered. Motion detected outside any interval of interest would not trigger any event.

It may also be noted that the motion detection unit 7, the distance calculation unit 15 and the event triggering unit 23 may be implemented in hardware or in software, and they may or may not be located in the imaging device 5. For purely illustrational purposes they are shown as separate boxes within the imaging device.

The position settings of the focus lens 17, the zoom lens 19 and the image sensor 21, in case this is movable, may be determined in a number of different ways. As one option, the actual position of the respective lens or image sensor used for focusing the areas where the motion was detected may be used as position setting, and this position may e.g. be determined by a position sensing system 27 based on a Hall effect sensor or other type of magnetic sensor, a light based position sensor, or any other suitable sensor type. The position used as the position setting could be determined e.g. in relation to a fixed point on the imaging device or in relation to a fixed mounting structure used for mounting the lenses and/or the image sensor in the imaging device.

As another option for determining the position setting(s), information regarding the position of or the work done by a motor 25 used for moving the lenses 17 and 19 and the sensor 21 may be used as the position setting. In case the motor 25 is a step motor, the number of steps made by the motor 25 for moving the respective lens 17 and/or 19 or image sensor 21 may be used for the determination of the distance via a simple calculation in known manner, typically by linearly translating the number of steps made by the motor to the position of the lens. The distance to the area where motion was detected is then given by a predefined and generally non-linear translation of the lens position.

In case a piezoelectric motor is used for moving the lenses 17 and 19 and possibly the image sensor 21, a position sensing system 27 comprising a position sensor of suitable type may be used for determining the position of the motor and thereby the position setting of the respective lens 17 and/or 19 or image sensor 21, and in turn the distance to the area focused. Such a position sensor may again be a light based position sensor, a Hall effect sensor or other type of magnetic sensor, or any other sensor suitable for determining movement or position of a motor.

It may be noted that the word "position setting" is intended to describe both the situation when the actual physical position of a lens group comprising the lenses 17 and 19, any or both of the lenses 17 and 19 and the image sensor 21 is used and the situation when the position or other setting, such as number of steps, of the motor 25 driving one or more of the lenses in the lens group comprising the lenses 17 and 19 and image sensor 21 is used. Another possibility is to use a software setting determined from the position or other setting of the motor; this case is also intended to be covered by the wording "position setting".

In Fig 2 a method 201 according to embodiments of the invention is illustrated. In step 203 motion is detected by the imaging device by comparing differences between a series of at least two images captured by the imaging device. In step 205 the imaging device is focused on the area where the motion occurred, and in step 207 the distance to that area is calculated on basis of at least one position setting used by the imaging device for focusing the area. In step 209 it is checked whether the determined distance lies within a predetermined interval of interest, and if it does, an event, such as a motion detection event or a rain detection event, is triggered in step 211. If not so, no event is triggered and the method returns to step 203. In case a rain detection event is triggered, the next step could be to activate the rain wiping equipment for clearing the any rain drops obscuring the sight of the monitoring system. In case a motion detection event is triggered, a signal, such as an alarm could be sent to an operator of the monitoring system who e.g. may perform a visual inspection of the object causing the motion. As previously noted, in addition to the event being an alarm, the event triggered could e.g. be a closing or locking of doors, to start a recording device for recording images of the scene, to initiate the movement of a camera or to create a log entry in a log file.

## Claims

1. A method of reducing the amount of falsely triggered events in a monitoring system comprising an imaging device (5) and arranged for monitoring the scene (3), comprising the steps of:
detecting (203) motion in an area of the monitored scene (3) by analyzing differences in a series of at least two images of the scene (3) captured by the imaging device (5),
focusing (205) the imaging device (5) on the area (9) where motion is detected,
calculating (207) a distance (13) to the area (9) by determining at least one setting used by the imaging device (5) for focusing the area, and
if the distance (13) is within a predetermined distance interval of interest, triggering (211) an event.

2. The method of claim 1, wherein the event is a motion detection event.

3. The method of claim 1 or 2, wherein the event is a rain detection event.

4. The method of any of the preceding claims, wherein the at least one setting comprises a position setting of a focus lens (17) in the imaging device (5).

5. The method of any of the preceding claims, wherein the at least one setting comprises a position setting of a zoom lens (19) in the imaging device (5).

6. The method of any of the preceding claims, wherein the at least one setting comprises a position setting of an image sensor (21) in the imaging device (5).

7. A monitoring system arranged for monitoring a scene (3) and comprising
a motion detection unit (7) arranged to detect a motion in an area in the monitored scene (3) by analyzing differences in a series of at least two images captured by an imaging device (5),
the imaging device (5) arranged to focus the area (9) where motion is detected,
a distance calculation unit (15) arranged to calculate the distance (13) to the area (9) where motion is detected by determining at least one setting used by the imaging device (5) for focusing the area (9),
an event triggering unit (23) arranged to trigger an event if the distance (13) is within a predetermined interval of interest.

8. The monitoring system of claim 7, wherein the event is a motion detection event.

9. The monitoring system of claim 7, wherein the event is a rain detection event.

10. The monitoring system of any of claims 7-9, wherein the imaging device (5) comprises a zoom lens (19) and wherein the at least one setting comprises a position setting of at least one of the zoom lens (19) or the focus lens (17).

11. The monitoring system of any of claims 7-10, wherein the imaging device (5) comprises an image sensor (21) and wherein the at least one setting comprises a position setting of the image sensor (21).

12. The monitoring system of any of claims 10-11, wherein the distance calculating unit (15) comprises a position sensing system (27) sensing the position of the focus lens (17) and/or zoom lens (19) and/or image sensor (21).

13. The monitoring system of any of claims 10-12, further comprising a motor (25) driving the focus lens (17) and/or zoom lens (19) and/or image sensor (21), and wherein the distance calculating unit (15) comprises a position sensing system sensing the position of the motor (25).

14. The monitoring system of claim 12 or 13, wherein the position sensing system (27) comprises at least one of a light based position sensor or a Hall effect sensor, or other type of magnetic sensor.

15. The monitoring system of any of claims 10-11, further comprising a step motor (25) driving the focus lens (17) and/or zoom lens (19) and/or image sensor (21), and wherein the distance calculating unit (15) is arranged to determine the position setting of the focus lens (17) and/or zoom lens (19) and/or image sensor (21) from the position of the step motor.

## Amended claims

### Amended claims in accordance with Rule 137(2) EPC.

**1.** A method of reducing the amount of falsely triggered events in a monitoring system comprising an imaging device (5) and arranged for monitoring the scene (3), comprising the steps of:
detecting (203) motion in an area of the monitored scene (3) by analyzing differences in a series of at least two images of the scene (3) captured by the imaging device (5),
focusing (205) the imaging device (5) on the area (9) where motion is detected,
calculating (207) a distance (13) to the area (9) by determining at least one setting used by the imaging device (5) for focusing the area, and
if the distance (13) is within a predetermined distance interval of interest, triggering (211) an event.

**2.** The method of claim 1, wherein the event is a motion detection event.

**3.** The method of claim 1 or 2, wherein the event is a rain detection event.

**4.** The method of any of the preceding claims, wherein the at least one setting comprises a position setting of a focus lens (17) in the imaging device (5).

**5.** The method of any of the preceding claims, wherein the at least one setting comprises a position setting of a zoom lens (19) in the imaging device (5).

**6.** The method of any of the preceding claims, wherein the at least one setting comprises a position setting of an image sensor (21) in the imaging device (5).

**7.** A monitoring system arranged for monitoring a scene (3) and comprising
a motion detection unit (7) arranged to detect a motion in an area in the monitored scene (3) by analyzing differences in a series of at least two images captured by an imaging device (5),
the imaging device (5) arranged to focus the area (9) where motion is detected,
a distance calculation unit (15) arranged to calculate the distance (13) to the area (9) where motion is detected by determining at least one setting used by the imaging device (5) for focusing the area (9),
an event triggering unit (23) arranged to trigger an event if the distance (13) is within a predetermined interval of interest.

**8.** The monitoring system of claim 7, wherein the event is a motion detection event.

**9.** The monitoring system of claim 7, wherein the event is a rain detection event.

**10.** The monitoring system of any of claims 7-9, wherein the imaging device (5) comprises a zoom lens (19) and a focus lens (17) and wherein the at least one setting comprises a position setting of at least one of the zoom lens (19) or the focus lens (17).

**11.** The monitoring system of any of claims 7-10, wherein the imaging device (5) comprises an image sensor (21) and wherein the at least one setting comprises a position setting of the image sensor (21).

**12.** The monitoring system of any of claims 10-11, wherein the distance calculating unit (15) comprises a position sensing system (27) sensing the position of the focus lens (17) and/or zoom lens (19) and/or image sensor (21).

**13.** The monitoring system of any of claims 10-12, further comprising a motor (25) driving the focus lens (17) and/or zoom lens (19) and/or image sensor (21), and wherein the distance calculating unit (15) comprises a position sensing system sensing the position of the motor (25).

**14.** The monitoring system of claim 12 or 13, wherein the position sensing system (27) comprises at least one of a light based position sensor or a Hall effect sensor, or other type of magnetic sensor.

**15.** The monitoring system of any of claims 10-11, further comprising a step motor (25) driving the focus lens (17) and/or zoom lens (19) and/or image sensor (21), and wherein the distance calculating unit (15) is arranged to determine the position setting of the focus lens (17) and/or zoom lens (19) and/or image sensor (21) from the position of the step motor.
